# EUROPEAN PATENT SPECIFICATION

(11) **EP 3 377 275 B1**
(45) Date of publication and mention of the grant of the patent: **20.11.2019**
(21) Application number: 16810469.3
(22) Date of filing: 08.11.2016
(51) Int. Cl.: B25J 5/00, B25J 11/00, B25J 19/02, B25J 9/16

(54) **CONTROL SYSTEM FOR SELF-MOVING PLATFORMS**
STEUERUNGSSYSTEM FÜR SELBSTBEWEGENDE PLATTFORMEN
SYSTÈME DE COMMANDE POUR PLATEFORMES AUTOTRACTÉES

(30) Priority: 16.11.2015 IT UB20155578
(43) Date of publication of application: 26.09.2018
(73) Proprietor: Tactile Robots S.r.l., 73100 Lecce (IT)
(72) Inventor: TORNESE, Riccardo, 73100 Lecce (IT)
(74) Representative: Bruni, Giovanni
(86) International application number: PCT/IB2016/056707
(87) International publication number: WO 2017/085589

(56) References cited:
- NORBERT ELKMANN ET AL: "Tactile Sensing for Safe Physical Human-Robot Interaction", ACHI 2011 : THE FOURTH INTERNATIONAL CONFERENCE ON ADVANCES IN COMPUTER-HUMAN INTERACTIONS, 28 February 2011 (2011-02-28), pages 212-217, XP055287522, ISBN: 978-1-61208-117-5
- ARGALL B D ET AL: "A survey of Tactile Human-Robot Interactions", ROBOTICS AND AUTONOMOUS SYSTEMS, ELSEVIER SCIENCE PUBLISHERS, AMSTERDAM, NL, vol. 58, no. 10, 31 October 2010 (2010-10-31), pages 1159-1176, XP027236387, ISSN: 0921-8890 [retrieved on 2010-08-01]
- WOSCH T ET AL: "Reactive motion control for human-robot tactile interaction", PROCEEDINGS / 2002 IEEE INTERNATIONAL CONFERENCE ON ROBOTICS AND AUTOMATION : MAY 11 - 15, 2002, WASHINGTON, D.C, IEEE SERVICE CENTER, PISCATAWAY, NJ, vol. 4, 11 May 2002 (2002-05-11), page 3807, XP032882734, DOI: 10.1109/ROBOT.2002.1014313 ISBN: 978-0-7803-7272-6
- NORIAKI MITSUNAGA ET AL: "Robovie-IV: A Communication Robot Interacting with People Daily in an Office", INTELLIGENT ROBOTS AND SYSTEMS, 2006 IEEE/RSJ INTERNATIONAL CONFERENCE ON, IEEE, PI, 9 October 2006 (2006-10-09), - 15 October 2006 (2006-10-15), pages 5066-5072, XP031006935, ISBN: 978-1-4244-0258-8
- KIM KWAN SUK ET AL: "Full-body collision detection and reaction with omnidirectional mobile platforms: a step towards safe human-robot interaction", AUTONOMOUS ROBOTS, KLUWER ACADEMIC PUBLISHERS, DORDRECHT, NL, vol. 40, no. 2, 23 July 2015 (2015-07-23), pages 325-341, XP035900708, ISSN: 0929-5593, DOI: 10.1007/S10514-015-9464-X [retrieved on 2015-07-23]

## Description

The preferred field of application of the present invention concerns the control of the ambulation of the self-moving platforms, with particular reference to the development of robotized systems suitable to ambulate in environments which are not necessarily known.

One of the most important aspects in the control of the ambulation of a robotized platform (or briefly, "a robot") consists of the management of the possible bumps or contacts that can affect this robot when it moves, especially in an environment not completely modeled in the memory the robot itself. As it is in the case in which a moving robotized platform is activated and it can move freely, and therefore not on a predetermined path (such as a rail or a guide), within an environment that can also present obstacles variable in time: an environment as it can be a room of a house or an office.

A first technological approach, which enables the management of such situations, provides for the self-moving robotized platform is equipped with sensors able, somehow, "to perceive" (or "to see") the environment in which it is moving. In this case, through the processing of the information received by these sensors, it is possible to prevent collisions with objects present in the environment.

The most important contraindication associated to this technology relates to the complexity of the processing, as they must substantially perform image recognition of scenes of a certain complexity, and such complexity is the greater the more the environments are not known a priori.

Both some operative limitations of this approach and some complexity factors depend on the technology of the sensors. For example, the infrared sensors do not properly perceive the presence of black, transparent or reflective obstacles, while the ultrasonic sensors incorrectly perceive very thin obstacles, or having surfaces not perpendicular to the ultrasound wave. In the case of use of vision sensors, instead, the complexity is in the estimation of distances, which is substantially impossible with monoscopic signals, and it is excessively complex with stereoscopic signals.

Then, the sensors necessary to the perception of a scene typically involves significant costs and energy consumption, and also require a considerable design complexity.

The complexity of required processing is further increased in the case of management of any contact that is not determined by the motion of the robot: for example, the case in which the robot is bumped or pushed, deliberately or accidentally, by another entity also in movement.

In general, it can be concluded that, to properly handle all the possible cases, the perception of sensors should ensure an omnidirectional coverage and provide a huge amount of information; and the processing required to synthesize a correct and reliable interpretation of events would end up to be, therefore, more and more complicated.

A second technological approach is based on sensors of contact (or pressure), which, given their simplicity, can be realistically disposed over the entire surface of the robotized platform, or over a large part of it.

The sensors of contact, obviously, can manage collisions only after they have occurred. Therefore, it is important to point out that the two technological approaches can be considered, in a certain sense, complementary, and a self-moving robotized platform can, in principle and when necessary, be controlled by means of both the above mentioned technologies, which are not necessarily alternatives, and can coexist in the same platform.

A further interesting application, made possible by the use of sensors of contact, which goes beyond to the management of collisions, is the ability to manually manage the movements of a self-moving robotized platform. In fact, by means of the sensors of contact it is possible to detect when the platform is pushed, for example, with one hand, and therefore it is possible to activate a motorized movement of the robotized platform in the direction consistent with the thrust received.

The manual control of self-moving platforms, in particular for some applications, has some advantages in terms of performance, compared with other control methodologies. For further information about the advantages of the manual controls of powered robotized platforms, please refer to: *Jevtic A., Doisy g.,* Parmet Y., And Edan Y., "Comparison of Interaction Modalities for Mobile Robot Guidance: Direct Physical Interaction, Person Following, and Direct Pointing" - IEEE Transactions on Human-Machine Systems - 2168-2291 2015 IEEE*.*

Further related to this invention are the following documents: NORBERT ELKMANN ET AL: "Tactile Sensing for Safe Physical Human-Robot Interaction", ACHI 2011; ARGALL B D ET AL: "A survey of Tactile Human-Robot Interactions", ROBOTICS AND AUTONOMOUS SYSTEMS, ELSEVIER SCIENCE PUBLISHERS, AMSTERDAM, NL, vol. 58, no. 10, 31 October 2010; WOSCH T ET AL: "Reactive motion control for human-robot tactile interaction", PROCEEDINGS / 2002 IEEE INTERNATIONAL CONFERENCE ON ROBOTICS AND AUTOMATION : MAY 11 - 15, 2002

The development of self-moving robotized platforms, capable of moving on generic, non-pre-defined and non-infrastructured paths, at the state of the art, is still a research issue, which is susceptible, and in need, of further evolutionary steps, before becoming a technology mature enough and suitable to be offered commercially, at least on a medium scale.

The present invention is inserted in this development context, it focuses in the solution of problems related to collisions and, more in general, to the contacts that a self-moving robotized platform may have with elements of the external environment. The present invention is defined according to claim 1.

Typically, the self-moving robotized platforms move on wheels, which may be of various types, may have more axes of rotation permitted, and may assume different forms (from classical disk shape to spherical forms, with different systems of constraint and / or transmission of the movement). Therefore, an initial approach which detects potential collisions can be based on the analysis of the resistant couples observed on the wheel. In fact, if a platform collides with an obstacle, the drive torque that before the impact was sufficient to move the platform, becomes insufficient, or the motion undergoes an appreciable slowdown.

Even any manual thrusts, eventually exerted on the robotized platform, would be identifiable to some extent, since they would appear as torque variations detectable on the wheels.

Then, it is possible to address the problem of the management of the motion of a self-moving robotized platform through the simple use of information obtainable from the analysis of the torques observable on its wheels.

The advantages of this approach are evident since it does not require the use of special sensors: in fact, the control of the movement must necessarily take place through the control of the driving torques on the wheels, and therefore the management of collisions and contacts can take place through a calculation based on the continuous analysis of information that are necessarily available, at least in part, for the control of the same platform, as the torques on the wheels and their angular speed.

This approach is not deepened because, despite being advantageously applicable in a certain variety of situations, a general use has significant drawbacks related to the fact that it must be based on an accurate modeling of the inertial system of the same platform and of the land on which the platform moves. In fact, a variation of driving torque can be determined from a weight change (for example, the platform can carry variable loads), or from a change in form (for example the platform may have the extendable arms which determine balancing variations), or the land may have different friction or small inclines not always adequately modeled, and in all these latter cases are possible interpretive misunderstandings, even coarse.

For completeness, it matters to note that it is also possible to conceive methods that do not adopt a particularly accurate modeling. They are such cases in which it is not requested a particular maneuvering accuracy: methods in which it is possible to accept a compromise that favors simplicity of implementation, or robustness, with respect to precision.

An example, at the state of the art, which is based on the analysis of the torques on the wheels of a self-moving platform to handle its ambulation, is given by the "Trikey robots" project conducted at the University of Texas in the United States of America.

Obviously, thrusts exerted on a platform, or eventual accidental collisions, can be detected by the insertion of sensors of force or of moment applied on different parts of the platform's structure, and not necessarily (or only) on the wheels. The case of sensors of torque applied on the wheels is particularly interesting (and it is known in many applications) since the measurement of torques on the wheels, in practice, is automatically available for the fact that the control of the platform's movement is exerted on the wheels. The use of sensors placed elsewhere in the structure of the platform, however, gives rise to alternative variants; then, in these variants the estimation of a pressure exerted on the platform is processed from measurements provided by some sensors localized in some specific parts of the platform.

In all such cases, and without going into the details of this approach, it matters to indicate how this approach is rarely suitable to detect low-intensity collisions, especially when the mobile platform is relatively heavy.

In order to manage contacts and collisions that can affect a self-moving robotized platform, more in general and independently from the inertial modeling, i.e. a modeling that is very difficult to be formalized, complex to be used and harbinger of ambiguous interpretations, it is appropriate to use robotized platforms covered with sensors sensitive to the touch.

There exist quite mature and reliable technologies, which allow to realize a thin cover, which is sensitive to a touch. In the context of technologies for robotics, such coverages are commonly referred to with the term "skin", precisely to indicate a thin cover that return a signal as a function of the contact. Ideally, in fact, it can be assumed that the skin is the seat of the sense of touch: for which, in the context of robotics, the term "skin" usually indicates a tactile sensor system.

As said, there are different technologies with which a "skin" can be created, and they can be roughly divided into two families: boolean "skins", and analog "skins".

The boolean "skins" return a two values signal, representative of the fact that there is a contact or not. These boolean "skins" are often organized as a matrix layout, so it is possible, in addition to detecting a contact, also to determine a smaller zone where such contact occurred.

The patent application US 2015/0073598 A1, Rosenstein et al., entitled "Human Interface Mobile Robot", in fact, describes a robotized platform called also iRobot (in other publications) covered with a boolean "skin" (which provides a so-called " touch input"). Said boolean "skin" implements a tactile interface that allows the operator to move said robotized platform, simply by touching it, and that supports the management procedures of potential collisions that could happen to such platform during its motion.

The iRobot platform is therefore just sensitive to a touch, so it is easy to implement a procedure that automatically stops the motion of the platform when it is touched at the side oriented towards the motion; as it is equally easy to implement a procedure that, when the iRobot platform is stationary and it is touched, it starts to move towards the direction which is compatible with the touch (interpreted as a thrust).

The system does not carry out a measurement of the pressure or of the power exerted by means of touches that are detected.

In addition to stop the motion on the occasion of collisions, an important application implemented in the platform iRobot provides that the manual control of the platform is realized with a sort of motorized aid to the motion of the platform itself. In fact, the drive torque generated at the detection of a touch can be dimensioned to be insufficient, even if only slightly, to move the platform; in this way, to move, the platform requires the contribution of a thrust: and precisely the intensity of the thrust, added to the driving torque generated automatically, serves to adjust the speed of displacement.

The significant usefulness of this application can be easily imagined. It allows, for example, to move heavy trolleys with light thrusts, being in fact the fatigue work largely done by the drive torque generated automatically. At the same time, such a trolley, even when it is very heavy, may be preserved from suffering or causing great damages due to accidental collisions, being able to implement, contextually (as mentioned earlier), a prioritized stop procedure in the event of a collision. It should however be noted that the intervention can take place only upon impact, and then the limitation of the damage may not always be sufficient.

In general, it can be concluded that the so-called boolean "skins" represent a technology useful for some applications that do not require particular accuracy of the movement and they can manage, although with distinct procedures, both the control of the movements and some countermeasures in cases of collision.

The analog "skins", unlike the boolean ones, allow to estimate the pressure with which a touch is exerted, therefore, they offer an additional control variable which can assume a continuous value within a certain range.

Also the analog "skins" are a technology suitable for the implementation of procedures both for the management of collisions, and for assisted manual handling of the movement. In fact, they allow to implement all that is implementable with boolean "skins" but, being able to provide information well-richer than the pure detection of the presence or absence of a contact, they can be exploited to improve the performance, in terms of effectiveness and accuracy, which can be reached with the boolean "skins".

Said analog "skins" are available in various types and can be realized with quite mature and reliable technology. Typically, they are constituted by conductor or semi-conductor materials manufactured in very thin strips having a variable resistance depending on the pressure that is exerted on them. They are already applied in the field of robotics, but mainly within the constrained mechanical arms, that is, in contexts in which the movements and possible trajectories are strictly limited. Other known applications take place in the field of mechanical manipulation of objects, in which it is important to adjust the pressure of a grip (e.g. in artificial hands, or pliers, of industrial robots). However, there are no known applications in self-moving robotized platforms, where their use is finalized to the control of the ambulation. In particular, in the known applications, the detected pressure is not used as an input variable for the determination of the type of motion that must be actuated. In fact, it is not immediate and easy to conceive a command protocol, based on pressure signals, and able to control correctly, accurately and safely the ambulation of a self-moving robotized platform in a generic environment.

In fact, one of the objectives of each human-machine interface (HMI) is that of allowing a person to issue commands in a natural and spontaneous way. Then the machine must be provided with an interpretative capability, able to understand a wide range of spontaneous and intuitive interactions that can be generated by a human operator.

At this point it matters to keep in mind as the most widespread technologies, sensitive to pressure, and used to make the most common "skins", enable excellent accuracy for very low pressures, while discriminate more coarsely the highest pressure. This characteristic of sensitivity is a critical factor, but is also a feature that allows to conceive a very accurate method of management (both for manual controls and for collisions). It is a critical factor since both the collisions and the manual thrusts, which may be caused by a human operator, can be excessively strong and, above all, they are manifested as a discontinuous "step" function in which the transition between the absence of pressure and significant pressure happens substantially in an instant. It can be assumed that when a person touches an object, the change of state from "absence-of-contact" to "presence-of- contact" (or vice versa) is a nearly instantaneous transition.

The considerable sensitivity to slight pressure, however, is also a useful factor for the implementation of a precise control, since it is also associated with the possibility of discriminating small variations of pressure.

Therefore, the main scope of the present invention is to conceive a new self-moving robotic platform whose mobility can be controlled with adequate accuracy, translating manual user commands into automatically-generated commands for the control of the motion. And said manual user commands can be given in a simple and intuitive way, by exercising a pressure, even of a slight intensity but, at the same time, compatible with the human sensitivity, on the sides of such a platform.

Another object of the present invention is to conceive a protocol, which is also intuitive, which allows to control manually, with the simple exercise of small pressures, the ambulation of a self-moving robotized platform, and such control must be able to be as precise as possible in terms of speed and trajectory, being possible both straight and curved movements, and even pure rotations.

Again, another object of the present invention is to conceive a self-moving robotized platform in which the same system of sensors and actuators used for the control of ambulation also constitutes a system exploitable for the effective management of possible collisions with external elements.

Finally, further object of the present invention is to conceive a self-moving robotized platform in which the rules for the control and the calibration of the system are the most simple and reliable as possible.

The intended purposes for this invention are achieved by means of a self-moving robotized platform that is covered on its lateral faces by a cover which serves as a pressure sensor, and said cover which acts as a pressure sensor is constituted by one or more layers that implement at least the following functions:
1. to constitute, at least in part, one or more electrical components connected in a circuit, whose electrical characterization varies depending on the pressure with which said cover is squeezed, and this variation of the electrical characterization is continuous at least in a range of squeezing pressures which are applied;
2. to constitute, at least on a portion of the outer lateral faces of said robotized platform (100), a cushioning layer made of a deformable material in a non-permanent way;
and said self-moving robotized platform also comprises a computing unit configured to control the trajectories of the motion of said self-moving robotized platform (100) by means of control commands which impose instantaneous speeds computed in real time as a function of the instantaneous pressures detected by said cover configured as pressure sensor.

The main advantage of the present invention is given by the fact that a self-moving robotized platform realized according to the teachings of the present invention, fulfills the main purposes for which it was conceived.

This invention has also further advantages which will be made apparent from the following description, which shows more details, from the attached claims, which form an integral part of the same description, and from the illustration of some examples of embodiment described, but not limited to, in what follows, and in the accompanying drawings in which:
Figure 1 shows a self-moving robotized platform with some elements characterizing the present invention.
Figure 2 shows some examples of motion paths which are determined by particular manual thrusts.
Figure 3 shows, in section, a detail of a "skin" covering the self-moving robotized platform according to the invention.
Figure 4 shows an example of a motion path which is a result of a manual action in which the self-moving robotized platform is pulled rather than pushed.

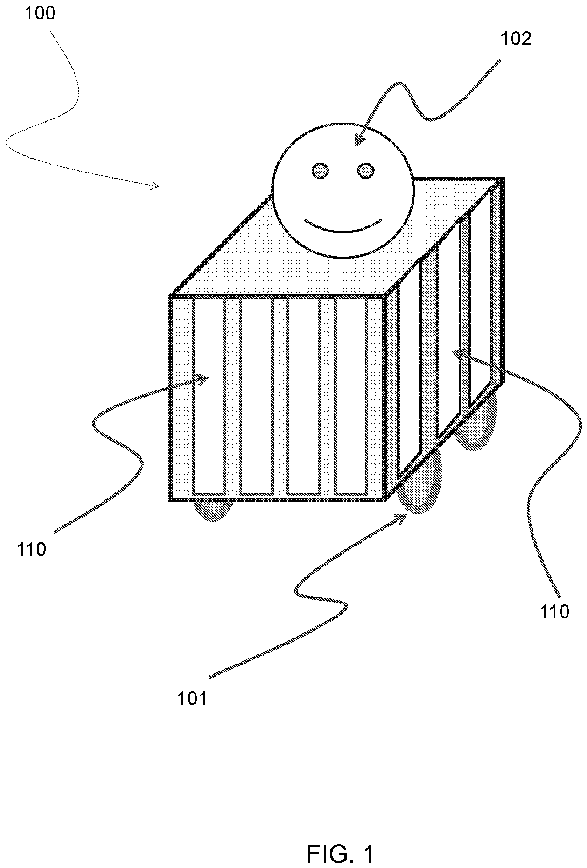

Figure 1 provides an overall view of a self-moving robotized platform whose shape is roughly constituted by a parallelepiped with four vertical sides.

Obviously any type of shape is possible, however, the parallelepiped-shaped platform, in addition to allow a clear illustration of the inventive principles of the present invention, also constitutes one of the preferred shapes as it can be conveniently used as a trolley for the transport of payloads, and can also house all the components necessary for the operation of the same platform. In addition, it can be also suitable to accommodate the integration of eventual mechanisms functional in different applications.

With the number 100 it is then indicated, as a whole, the self-moving robotized platform according to the teachings of the present invention. However, the representation offered in Figure 1 is essential and partial; they are highlighted only few elements, which are useful to illustrate some important features of said self-moving robotized platform 100 according to the invention.

With the number 101 it is then represented a wheel, it indicates a possible mean of implementing the ambulation of the platform 100, and with the number 102 it is shown a generic load of the platform 100 which can be, as said, a mere load to be transported as well as a device, for example anthropomorphic, which can be an integral part of the same platform, designed to perform a particular function. Finally, with the number 110, some tactile films covering all the side walls of the platform 100 are indicated. Such tactile films 110, in the example of Figure 1, take the form of strips, therefore, in the following of this description, they will be often referred to using the expression "tactile strips". Such tactile strips 110 are the elementary pressure sensors, which constitute an essential part of the pressure sensing system, i.e. the so-called tactile "skin" of the platform 100.

As stated above, it said tactile strips 110 constitute a known technology and they can be realized with conductive or semiconductor materials whose resistance is variable depending on the squeezing pressure that is exerted on them. However, such use of tactile strips 110, based on the property of those materials whose resistance varies according to the pressure to which they are subjected, is just one of the possible choices for realizing the pressure sensors. In theory, also other materials can be used, in fact a pressure applied on a material can also influence other parameters, such as its capacitive characterization or, more in general, its overall electrical characterization, so that, when said material is inserted in a powered circuit, measurable effects take place, and the pressure exerted on it can be estimated.

In other embodiments of the present invention, such pressure sensors can be systems more complex than it is a particular material that varies its electrical behavior as a function of the pressure to which it is subjected. Said pressure sensors can be, for example, real circuits that exploit other characteristics, not strictly electrical, of certain materials (for example of optical behavior characteristics), and such circuits can integrate, inside them, measurement subsystems, and / or other circuit components.

However, for the purposes of this description of the present invention, these pressure sensors can be generically modeled, at a high level, as components of an electrical circuit with an electrical characterization pressure-dependent: it means that a measurement of an electrical quantity can be performed on them, and this measure (e.g. voltage or current levels, or frequency measurements, both continuous and discrete, etc...), which is dependent on the pressure which they are subjected to, is manageable by a computer.

Coming back still to the case taken as an example, in which the tactile strips 110 are composed of variable resistance material, the tactile sensor system works when said tactile strips 110 are all connected so as to form an electric circuit crossed by current, in which there are inserted measuring elements capable of detecting, selectively, changes in resistance in each of the various tactile strips 110 that substantially cover the entire sides of the self-moving robotized platform 100.

Thus, though not shown in Figure 1, said self-moving robotized platform 100 must also include: motors and any means of transmission to drive the wheels, electrical power supply means, measuring components of electrical quantities and at least one computing unit for reading data and for controlling the platform 100 as a whole. Said computing unit must therefore be capable of generating control commands to be transmitted, directly or indirectly, to the wheels of the robotized platform 100. The wheels can in fact be moved by a motor directly controllable by said computing unit, comprised in said self-moving robotized platform 100, or they can be associated to a specific controller of the wheels, able to receive suitable digital commands, always generated by said computing unit.

For completeness it has to be stated that the actuation of the movement of a self-moving robotized platform 100, implemented through a control exercised on the wheels, can be conceived in a wide variety of combinations of drive wheels, steering wheels and free wheels (obviously with different control accuracies): from the simplest case in which there is only one driving wheel, to the most complete case in which all the wheels are driving and steering.

The fact that the tactile strips 110 of the example illustrated in Figure 1 are vertical and approximately corresponding to the entire height of the self-moving robotized platform 100, indicates that they are able to discriminate the point of the perimeter where a pressure is exerted, but they cannot determine the height.

It is clear that it is possible to create a tactile "skin" of said self-moving robotized platform 100 also with other arrangements and forms of the tactile strips 110, in order to better discriminate the points where a pressure is detected. Even in the presence of such configurations, and even more in the case of greater precision in the detection of pressure points, the inventive principles that characterize the platform 100, as a whole, are applied and remain valid.

It should be said that, when the platform is moving on a substantially flat surface, the configuration of pressure sensors arranged as in Figure 1 can be a realistic and efficient configuration for the easy achievement of the intended purposes.

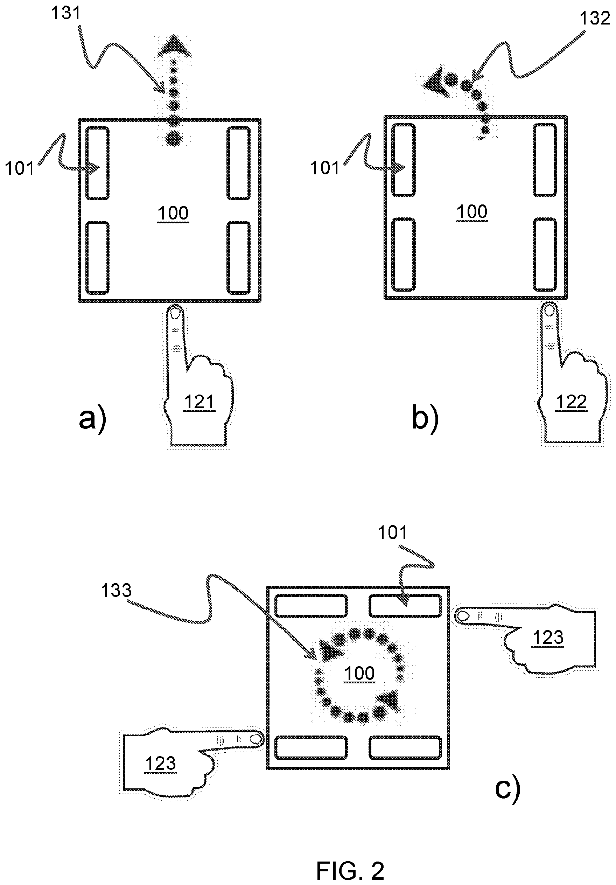

Figure 2 shows three examples of movements which are consequent to the exercise of particular thrust pressures.

In all three examples [Figure 2 a), Figure 2 b) and Figure 2 c)] it is presented a top view of the self-moving robotized platform 100, whose plant is approximately square. Said platform 100 is represented in an essential way, and the only depicted element is constituted by the wheels, from a top view too, and indicated, as in Figure 1, with the number 101.

Even in the examples of Figure 2 it is assumed that the tactile strips 110 are disposed vertically and side by side, and that their length corresponds to the height of the side faces of the self-moving robotized platform 100. It is then also assumed that said platform 100 can move on a plane, then, for the purpose of the movement, it is certainly more important to determine the horizontal position of the push point, rather than its height position.

In Figure 2 a), with the number 121, it is shown a hand that pushes said self-moving robotized platform 100 in a central point of one of its four side faces. The number 121 therefore also indicates a pressure, defined in terms of its intensity and zone of application.

In this case, the tactile sensor system detects the pressure 121. And if the platform was very lightweight, it would move with an approximately rectilinear motion in the direction of the thrust.

Said pressure 121, detected by the tactile sensor system, can then be intuitively interpreted as a command for the activation of a rectilinear motion, in which acceleration and velocity are calculated instant by instant as a function of the pressure which is applied. The number 131 indicates an arrow which is representative of rectilinear motion that is put in place, for example, through the drive wheels 101.

The calculation of the motion 131 can be made in various ways. One way that certainly can be very intuitive is based on the model of the "empty box". Applying this model of the "empty box ", the calculation is reduced to simulate the motion that would occur if a pressure equal to that measured was applied to an empty, very lightweight box, having the same size of the robotic platform 100.

Once the speed is determined in this way, by means of an automatic control, the appropriate couples can be applied to the drive wheels so that the instantaneous speed of the self-moving robotic platform 100 corresponds to the instantaneous speed calculated with the model of the "empty box".

A slight thrust given at the center of a face of the self-moving robotic platform 100, such as that represented in the examples of Figures 1 and 2, thus constitutes a particularly intuitive command to determine a rectilinear motion in the direction of thrust.

At this point, it is possible to infer how to impart other manual intuitive controls, to determine also curvilinear motions, through a slight pressure. In fact, continuing to imagine an "empty box", and applying a pressure, i.e. a push, no longer at the center of a face, but at a point shifted toward an edge of said face, the resulting motion, in the case of an "empty box ", would be a curved motion which will also tend to rotate this hypothetical" empty box. "

Such a case is represented in the example of Figure 2 b), where the number 122 indicates a pressure exerted in an evidently decentralized point of a side face of the platform 100. As in the case of the example of Figure 2 a), the pressure 122 can be measured, and the model of the "empty box" can, once again, be applied for determining the resulting motion if a pressure equal to the measured one is exercised on an "empty box". The resulting motion is shown in Figure 2 b) with the curved arrow indicated with the number 132; and said motion 132 can be embossed to the self-moving robotized platform 100, by the control of the drive wheels 101, as happened in the case of the motion 131 in Figure 2 a).

Thus, it is clear that a self-moving robotized platform 100 can be operated manually, making it to follow various types of trajectories, exerting little pressure either in the middle of the side faces, or on more decentralized points. Exerting slight pressures, it is then possible to move the platform 100 very slowly curing the accuracy of movement; while greater accelerations can be imparted by increasing the pressure.

The calculation of the speeds and accelerations which have to be imparted to the platform 100 as a function of the detected pressures is not deepened beyond, since it is evident that multiple strategies may be adopted. The model of the "empty box", which has been previously mentioned, is very intuitive, and it can also be adopted partially, for example limited to a predetermined range of pressures. The partial use of the model of the "empty box", in fact, may foresee the insertion of thresholds on the maximum speed or accelerations allowed to the platform.

An important concept can be synthesized and generalized: namely that, on the basis of the information on the extent of pressure manually exerted on a self-moving robotized platform 100, it is possible to conceive the formulas for calculation of the movement commands of said platform 100, and said commands can be intuitive for the operator who have to exert them, and at the same time they may take into account and manage also other application-specific requirements, for example to increase safety.

In Figure 2 c) it is finally represented a further example of motion. The number 123 indicates a couple of pressures, i.e. two forces, exerted in opposite directions, but axially offset. If such pressures were exerted on an "empty box", they would determine a rotation. This rotational motion is represented in Figure 2 c) by the circular arrow indicated with the number 133. As a result, similarly to what shown in the previous cases of Figure 2 a) and Figure 2 b), the command consisting in the exercise of two light pressures at appropriate points, able to generate a couple of forces, is an intuitive command to impart to the self-moving robotized platform 100 a rotation.

All the examples shown in Figure 2 have the main goal of moving the platform 100; and these examples allowed to illustrate how it is possible to define a protocol of intuitive commands to impart with absolute generality the motion of a self-moving robotized platform 100 covered, in all its lateral faces, with a tactile "skin".

It is noted, at this point, as the model of the so-called "empty box" should not necessarily be understood as a model to be strictly reproduced for the definition of the manual control commands. Rather it is just a model to derive inspiration for conceiving a system of manual and intuitive user commands for the movement of a self-moving robotized platform.

In short, the self-moving robotized platform 100 according to the teachings of the present invention can be physically maneuvered by generating automatic control commands that determine the directions of movement and the rotations "compatible" with the manual controls exercised by an operator: in other words, such directions of movement and such rotations are those that the operator can intuitively expect as a consequence of the thrusts he exerts at certain points on the outer surface of the platform 100.

Once the intuitive nature of the controls is preserved, it is certainly possible, and also recommendable, to tune the functions that provide the calculation of the control commands as a function of applied pressure, by means of calibration processes, which can also be empirical.

In addition to the problem of the manual control of the movement, it is noted that the so-described system is a platform which also implements an automatic management of collisions. In fact, when a collision (or impact) happens, the "skin" of the self-moving robotized platform 100 necessarily detects the occurrence of a pressure at a point of its surface. As a consequence of said pressure generated by the impact, the self-moving robotized platform will move in opposition to the movement that caused the bump itself; and consequently the platform 100 will move away from the obstacle bumped. Just detached away from the obstacle, it will no longer sense any pressure, and then it will stop.

The process synthetized above, therefore, would appear to be already a way for the management of the collisions, it would be enough just to state that the commands generated as a result of pressures on the "skin" of the platform 100 must override all other controls; In fact, the platform 100 is typically also controllable with other non-manual commands, for example, it can be controlled remotely.

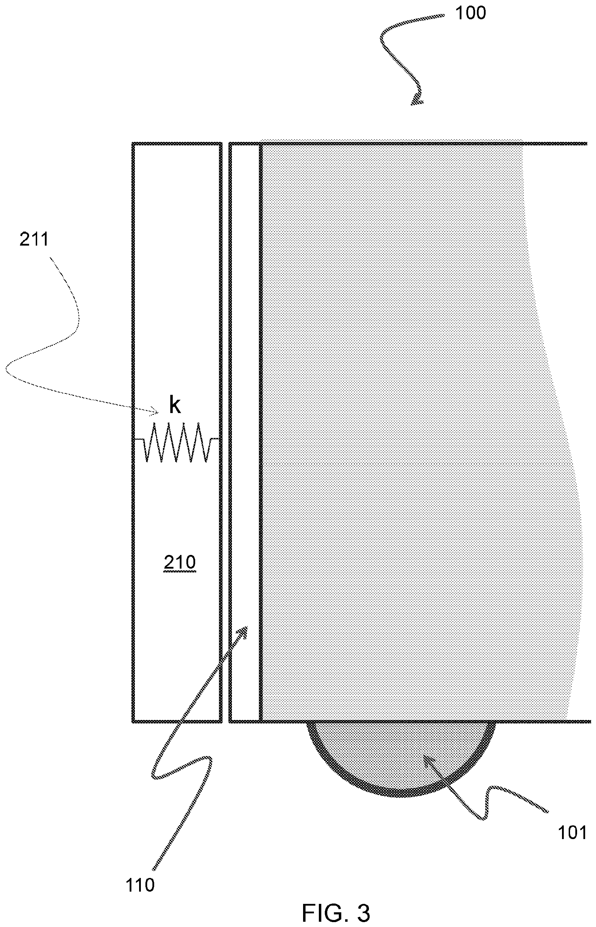

The above-described management of the bumps, however, presents some obvious drawbacks. In fact, if the bump is just a little violent, the pressure produced by the impact is high and consequently the speed with which the platform 100 is rejected is also high. But then, as soon as the platform detaches from the obstacle, the platform stops, once again rather abruptly due to the total absence of pressure. To avoid such too abrupt behavior, various strategies can be adopted. The expedient adopted according to the teachings of the present invention is illustrated with the support of Figure 3.

Figure 3 proposes a side sectional view of a detail of a self-moving robotized platform 100 according to the teachings of the present invention. As in the previous figures, the number 100 indicates the platform as a whole and the number 101 a wheel of the same.

The view proposed in Figure 3 highlights a tactile strip 110 shown, in this case, in its thickness, while the number 210 shows a cushioning layer, this also shown in its thickness. And said cushioning layer 210 covers all sides of the platform 100, also covering all the tactile strips 110.

Said cushioning layer 210 can be realized with soft materials, such as foam rubber or particular viscoelastic foams (also called "memory foams"), and it is characterized by an elastic coefficient "k", indicated in Figure 3 by the reference numeral 211.

If the elastic coefficient "k" of the cushioning layer 210 is low enough, during a collision, said cushioning layer 210 is compressed by opposing little resistance, and by transferring to the tactile strip 110 a pressure initially very mild, however, enough to instantly generate a command to move the platform 100 in opposition the motion of collision.

Unlike the motion that would be generated as a result of a non-amortized collision, such motion, contrary to the collision, will be soft. Moreover, during said phase of detachment, the cushioning layer 210 must resume its initial shape, and as long as this position is not reached, it continues to exert a pressure, albeit declining, on the tactile strip 110, and therefore also the speed of detachment will decrease gradually until the complete separation of the platform 100 from the bumped obstacle.

The great utility of said cushioning layer 210 is therefore evident on the occasion of collisions: it is an important characteristic for the good functioning of the motion control system of the self-moving robotized platforms 100 according to the teachings of the present invention.

Said cushioning layer 210 is of great benefit not just on the occasion of collisions, but it is also useful during the manual operations for the control of the platform. In fact, the typical manual sensitivity of most people is not enough to perform very precise controls. It can happen that, in the moment of contact, a manual push may produce a too sudden and intense pressure, enough to determine a sudden leap forward of the platform 100, and if said leap forward determines a loss of contact, the platform would stop abruptly, then maybe it suddenly starts again, if the hand should restore with a contact, and so on as to produce a start of very irregular motion.

It is possible to choose a compromise by setting quite high thresholds for the pressures able to activate the motion, but considering the fact that the tactile strips 110 are typically more sensitive (and accurate) at weak pressures, that choice would give away the possibility to have a precise control of motion.

But, if very low motion activation thresholds were set, to take advantage of the dynamics of sensitivity of the tactile strips 110, the manual control of the platform would be allowed only to operators capable of extremely light touch: so it is clear that this limitation would represent an unacceptable usability limit for the entire system.

Even the hypothetical use of sensors sensitive to touches at higher pressures, would have contraindications, since accidental impacts would be managed only when manifestly vigorous.

The presence of a cushioning layer 210 is therefore essential to achieve the precision of manual control without limiting it only to people able to act with very lightweight hand. Indeed, a manual touch, filtered by a cushioning layer 210, always produces a slight pressure on the tactile strips 110 as soon as the hand, or the object with which the thrust is exerted, comes in contact with the outer surface of the cushioning layer 210. This gentle pressure slowly starts the motion in the desired direction without causing an unwanted gap between the hand (or the object with which the thrust is exerted) and the platform 100 that has to be handled, and the person who is carrying out the manual control has the time to adjust the pressure with which he intends to push.

A further benefit determined by the presence of said cushioning layer 210 is given by the fact that it distributes the effect of the exerted pressure over a wider surface. So, if the pressure is exerted, at the outer side, in a very reduced area, for example, if the thrust is carried out with a pointed object, the pressure transferred to the tactile strips 110 results exerted in a wider area.

Without going into the details of the technology of the tactile strips 110, which for the purposes of the present invention can be considered as a known and mature technology, it is important to underline that the precision of a tactile strip 110, intended as a pressure sensor, generally improves in the case where the pressure is more distributed.

Anyhow, the interpretation of the output signal coming from the tactile sensor system which constitutes an essential part of the "skin" of the self-moving robotized platform 100, must be calibrated in the final assembly conditions, then with cushioning layer 210 already applied. And the presence of said cushioning layer 210 also facilitates the calibration process by reducing the number of forms of objects with which to exert the calibration thrusts. In a limit case, especially for the calibration of relatively light pressures, only one contact object can be used (perhaps with a form recalling the thrust carried out with a hand).

It should be also pointed out, with regards to the calibration phase, that said cushioning layer 210, can also produce a not useful effect when the control is not performed manually. In fact, sudden accelerations and decelerations (e.g. those imparted with remote control) may cause that, by inertia, said cushioning layer 210 determines slight pressures on the underlying tactile strips 110: such pressures, not produced by impulses or impacts, should not be considered for purposes of movement control, and therefore it should be set, in the calibration phase, also a minimum activation pressure threshold. Said minimum activation pressure threshold can be much lower the better said cushioning layer 210 is applied, and if it can be maintained low enough it can reasonably be considered useful, since it allows to avoid the generation of motion even when the platform is just lightly touched.

The motion control system described so far works properly and meets the purposes for which it was designed without the need to synthesize explicitly the piece of information indicating whether a pressure is determined by an accidental collision or by a volunteer thrust. Therefore, it is suited for the implementation of self-moving robotized platforms also extremely simple, where simplicity is certainly an advantage when a satisfactory performance is obtained the same.

However, the control system, as described so far, has enough information to perform a far more elaborate processing that allows to increase the performance both in the ambulation and in the collision control.

In particular, it is possible to provide that the control commands generated by the computing unit, besides being dependent on the sensed instantaneous pressures, also depend on the state of motion of the platform itself.

In fact, a pressure directed against the motion generates a braking, in this case a quite high maximum deceleration may be set, both in the project and during the calibration: this is to allow a sudden braking and to limit the damage from a collision. In the case of a pressure exerted to initiate a motion, instead, lower permissible accelerations should be imposed, so as to have always more sweet starts, also in case of possible abrupt pushes which could be applied unintentionally.

It is clear then, that the functions that bind the generation of the movement commands with the state of motion of the platform 100 may significantly depend on the context of application; and the availability of a self-moving robotized platform 100, designed according to the teachings of the present invention, is well suited to support very flexible implementations of the motion functions: a fine tuning can take place both in the design refinement phase and in in-field calibration phase.

A further clarification is about the choice of the "skin" that serves as a pressure sensor. The implementation shown in Figure 3 is based on two overlapping layers: the first, very thin, which implements the function of the pressure sensor, the second more thick, that implements the cushioning function. The choice of the double layer is dictated by the performance, also in terms of quality and cost of the technologies that are more convenient and effective at the state of the art.

However, it is not excluded that both functions can be guaranteed, in the future, with higher quality and at competitive costs, also with different materials that can implement both functions (sensory and cushioning) in an integrated way.

For example, there are known piezo-electric or piezo-resistive materials with which it is possible to realize the pressure sensors, and these materials are also sufficiently deformable so that they can be manufactured with thicknesses suitable to implement also the damping function. At the time, these materials are still a bit too hard, they have not yet adequate sensitivity in the range of pressures of interest for the application of the present invention, and also the costs are not competitive compared to implementation with the bilayer solution. However, the technological evolution may propose, in the future, materials with characteristics suitable for achieving a "skin" able to serve as a pressure sensor by the use of a single layer made with a material with performance (in terms of quality and cost) better than that currently available. Then it will be possible to resort to a solution of implementation based on a single-layer coverage, without departing from the inventive concepts developed in the present invention.

Again, a further implementing option can occur in the case in which particular technologies for implementing the pressure sensors are available. In fact, it is possible to hypothesize a further case in which the layer that implements the function of the sensor is made with materials that confer elasticity and flexibility, consequently this layer can be deformed, even significantly, when subjected to a pressure, and then return to its initial shape.

A pressure sensor of this type can therefore perform, to a certain extent, also the cushioning function. However, unlike in the previously illustrated variant of implementation, in which the possibility of having a cover formed with a single layer is mentioned, in many cases the elastic characteristics and the thicknesses of these layers are not suitable for the realization of a tactile cover able to implement a cushioning function sufficient for the purposes of the present invention. In such cases it is therefore necessary to increase the cushioning function by the addition of a further layer that performs a purely cushioning function, which can be typically placed below the layer that implements the function of the sensor.

Therefore, generally speaking, the implementation of the cover of the self-moving robotized platform (100) which serves as a pressure sensor can also be implemented according to a further variant with respect to the preferred implementation illustrated in Figure 3, with two layers where a first layer is outermost and implements both the pressure sensor function (fully), and the cushioning function (partially), while the additional layer is the innermost and completes the implementation of the cushioning function.

Even in implementations according to this latter variant, however, the solution is implemented in accordance with the essential concept that characterizes the present invention, which consists in conceiving a self-moving robotized platform (100) whose motion can be manually controlled by an operator with commands imparted touching the platform itself in an absolutely intuitive manner.

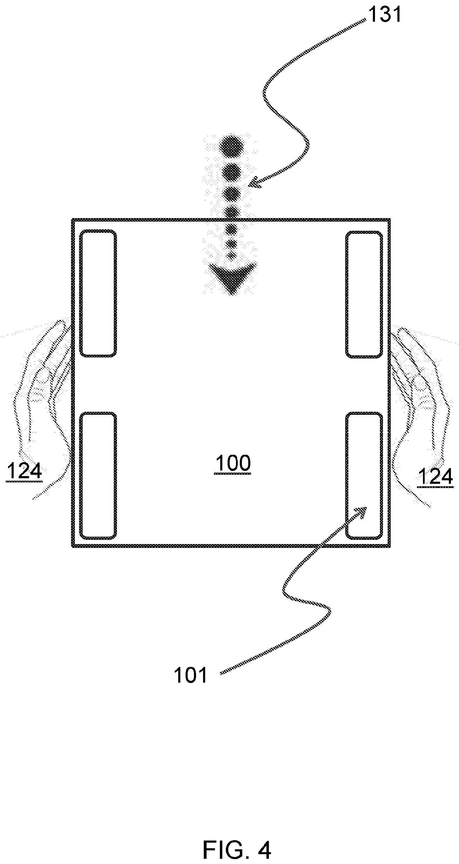

Figure 4 shows a particular type of contact that may take place when a person wishes to move the self-moving robotized platform 100 in an intuitive way by pulling (instead of pushing) it. As in all the other figures, the number 100 indicates the platform as a whole, while the number 101 a wheel of said platform.

The number 124 indicates two hands exerting a type of contact different from those considered until now. The contact indicated with the number 124 is therefore a type of contact that a person can exert on the platform 100 when he wants, in an intuitive and natural way to pull it towards him. The number 131 indicates an arrow that is representative of a rectilinear motion.

Unlike the rectilinear motion 131 exemplified in Figure 2 a), which was determined by a thrust, in the case of Figure 4, the operator is expected that such a substantially rectilinear motion 131 takes place because he pulls the platform.

The case of Figure 4 is representative of a set of cases in which multiple contacts are exerted on the platform 100. In general, since it is possible to evaluate both the area where the contacts take place, and their intensity, an initial simple processing consists in calculating the resultant of the exerted forces. The case, already illustrated, in Figure 2 c), is the application of two contacts, indicated with the couple of thrusts 123, which generate a torque that puts the platform 100 in rotation; in the case in which the two thrusts 123 are also equal in intensity, the resultant will not present any suitable component in the translational motion of the platform 100, which therefore will be affected only by a motion of rotation.

Unlike the case of Figure 2 C), the case of Figure 4, however, may generate a null, or almost null, resultant, because the forces exerted on the two sides of the platform 100, with the two contacts 124, oppose to a great extent, then their effect vanishes without giving rise to a significant torque, as they are exerted on approximately the same direction, and therefore they contribute nor to the generation of any displacement, nor to any rotation.

The processing of data about the pressures exerted on the "skin" of the platform 100, however, not only allows to calculate a resultant of the applied forces, but also allows to detect the extent of the forces which, while exerted on the sides of the platform, are opposed canceling each other.

The case in which the entity of the forces which cancel, tightening the platform 100, is decidedly prevailing with respect to the possible formation of small torques, corresponds to a sort of intention of grabbing the platform 100, by the operator who is manipulating it.

And, therefore, such intention of grabbing the platform 100 can be synthesized through the processing of the data from the "skin" (it is recalled that it is nothing else than a system of analog touch sensors, sensitive to pressure), and the cases in which two opposing forces are exerted roughly on the same line can be identified: approximations are necessary because the evaluations have to do with the interpretation of manual and spontaneous controls.

In order to preserve the prerogative that imposes just manual controls designed to be intuitive, it is then appropriate to consider the event that an operator, acting with spontaneity, and wanting to move the platform 100 by pulling it toward him, tightens it between his hands and pulls.

The interpretation of such behavior, would require a "skin" composed by tactile sensors able to measure not just the pressure but also the components of force parallel to the surface. It is theoretically possible to use sensors of this type, but they do not constitute a low-cost technology and easy to be supplied (they are mostly laboratory material), and furthermore, even if available, their exploitation would require a considerable complexity, even circuital.

Although not excluding, in principle, the possibility of using such advanced "skins" also sensitive to the forces exerted by friction and having components parallel to the surfaces covered by such "skins", the system implemented according to the teachings of the present invention can support the interpretation of a manual command imparted as depicted in Figure 4 (i.e. two hands tightening a platform 100 and pulling it), also using the most common and simple tactile sensors, which are sensitive only to the pressure (i.e. just forces perpendicular to the surfaces) . Thus, as noted above, through the processing of data only considering the pressures on surfaces, it is still possible to identify cases in which a kind of grab is exerted on the platform. Having such information (i.e. the presence of a grab), can be implemented a specific program, which, only when there is the presence of said grab, such program considers other input data, easily available in the self-moving robotized platforms, such as, for example, the data about the torques acting on the wheels.

As explained above, the techniques for the manual control of a platform based on the knowledge of the torques on the wheels are known techniques, whose contraindications reside in less accuracy and in the fact that they require a good modeling of the environment and of the platform itself.

However, in the case in which these techniques based on the analysis of the torques generated on the wheels are used in combination with the techniques based on the detection of the contacts on the surface of the platform 100, the drawbacks can be significantly limited, as the analysis of the torques on the wheels can be considered, and used, to derive only a specific component of the motion desired by the operator, who may continue to dictate the other components of the motion by the aid of the tactile sensor system.

For example, rotations can be obtained by adjusting the pressure of the grip in points not perfectly opposite, thus giving rise to a resultant of the pressures which also provides a torque, or an oblique motion can be obtained by exerting a different pressure with the two hands, thus only the pressure exerted by one side vanishes, while the pressure exerted on the opposite side is not completely compensated.

The cited example is then generalizable, and indicates a further possibility of control offered by the self-moving robotized platform 100 made according to the teachings of the present invention. Such command opportunity allows to preserve the spontaneous and typical behavior that an operator can put in place when it intends to manually maneuver the movement of the platform 100. And this possibility is given by the fact that the movement to be imparted to the self-moving robotized platform 100 can be calculated not only by determining the resultant of the pressures applied on the surface; in fact, the analysis of these pressures, when exercised in more points, can also reveal the presence of grabs, namely the presence of components of forces that oppose without necessarily generate significant torques (so rotations), and in the presence of such grabs can therefore provide other information for the analysis, such as the occurrence of torques applied on at least one wheel of the platform. The occurrence of such a type of torque, applied on at least one wheel, allows to detect intention of operator of imparting a component of motion in the direction perpendicular to the force components which vanish each other by opposing.

And so, it is then possible to transform the identification of this intention into a corresponding movement command.

The analysis of torques present on the wheels is also useful as it allows to distinguish the case in which an operator pushes (intentionally or for distraction) the platform against an obstacle. In fact, also in this case, the tactile sensor system detects opposite forces that cancel each other: the thrust exerted by the operator and the opposite resisting force from the obstacle. However, in such cases, it doesn't arise on the wheels a torque corresponding to a movement perpendicular to the force components which are opposed, and the case can thus be managed and treated differently.

Depending on the complexity of the processing, and on the accuracy of the data coming from the measurement of the torque variations on the wheels, a more or less precise control can be achieved. However, the compromise in precision is certainly acceptable with respect to the achievable result, which is to devise a system capable of interpreting with completeness a great variety of spontaneous manual controls that can be given by an operator.

Even in the case that some of the platform motions are imparted as a result of these "gripping" command, the system can be calibrated once assembled, this calibration phase can be designed so as to take account of the typical use cases, and in this way also the precision achievable with this type of command can be further improved.

It has been underlined in many parts of this description that the leading goal that has guided the implementation of the commands for the control of the motion of the self-moving robotized platform according to the teachings of the present invention, was to conceive an intuitive set of control commands that enable an operator, even after a very short period of practice, to manually operate the platform.

This objective can be achieved, as mentioned above, inspired by a very intuitive model, such as the model of the "empty box." It means that, the operator has the ability to impart the movement control commands simply imagining to push or pull a lightweight box, while, in many cases, it is actually a platform having considerable weight and inertias.

Well, the self-moving robotized platform according to the present description (i.e. provided with a tactile "skin" sensitive to pressure and associated to appropriate processing means suitable to generate commands for the movement of the platform itself) can support the generation of commands which may be inspired to other intuitive models.

In fact, the "empty box" might be imagined to be "sticky" too, as well as lightweight; having surface completely "sticky", or "sticky" only in some parts appropriately identified. It is therefore possible to refer to a model, intuitive again, such as the model of the "sticky empty box."

Such model is intuitive as it is immediate to imagine what can happen by touching a lightweight box, but very "sticky." In this case, after the touch with a hand, it would remain stuck to the box, and withdrawing said hand quite slowly, the box would continue to remain attached to the hand, and then, being said box actually light, it would be pulled, even in the absence of handles.

Otherwise, if the hand was withdrawn with a sudden movement it probably would detach without pulling the box with continuity.

Then it is obvious to think that, if the hand continues to push, the box would move in the direction of the thrust, exactly as in the cases discussed extensively in the previous part of this description.

The intuitive behavior described above, which regards a "sticky empty box" can be easily implemented, with more or less approximation, in the platform conceived in accordance with the present invention.

In fact, since the various pressures exerted on the side surfaces of the platform are known as well as the pressure points (for the presence of the tactile "skin"), it is also possible to determine whether or not a pressure is exerted in a "sticky point". In this case, in addition to the control commands generated as explained above, consistent with the model of the simple "empty box", additional commands must also be generated in correspondence to the changes of pressure that are determined by the movement of withdrawal of the hand (or of the object with which the platform had been touched). The commands, which have to be generated in this case, control the motion of the platform in order to determine a movement similar to the one which would occur if the platform were pulled from the contact point (sticky).

Slow movements of retraction allow the platform to follow the hand (or the object used to touch the platform) maintaining a contact and preserving a light pressure. Then, if the movements allowed to the platform implemented in this way are quite smooth, by placing a limit on the permitted speed and acceleration, an eventual abrupt retraction movement of the hand (or the object used to touch the platform) could not be followed by the platform, there would be the detachment and the platform would no longer be pulled thanks to the so-called "sticky" effect.

The mode of detachment indicated above is absolutely intuitive, and it is also easily implementable in the self-moving platform realized in accordance with the present invention; nevertheless, there are other ways, just as easily implementable and equally intuitive. For example, an operator may detach the hand by touching the platform at another point to hold it: it is evident that, being possible to detect also this further touch, it is easy to interpret the will of detachment from the operator.

Definitively, the intuitive "sticky empty box" effect is easily deployable and also useful in a number of circumstances where it is not easy neither push in the right direction nor even grabbing the platform. For example, in cases where a platform is parked in a sort of niche (in which it was uncomfortable to grab and pull it out), it may be particularly convenient, just to touch the platform, remain "stuck", and pull it out slowly.

The implementation of this "sticky empty box" effect is, as already said, very simple. It is sufficient to determine whether a pressure is exerted at a point to be considered "sticky", and to interpret appropriately the pressure variations in the sense of their reduction, as indicators of a command of pulling the platform (in the case of slow movements) or as indicators of release intention (fast movements).

In general, particular pressures on the self-moving platform (100), defined by their point of application, by their intensity or variation of intensity, can thus be associated with movements of the platform in the direction towards the operator; the operator can interpret these movements intuitively by making a more or less faithful analogy with the behavior of a lightweight object that remains "stuck" to him in the contact point.

The points, or the circumstances, in which the lateral surface of the platform is "sticky" can be determined by many variants of implementation. Among these, few example may be cited: the simplest is the definition of permanent "sticky" areas (possibly highlighted graphically on the side surfaces of the platform), or a "sticky" area may be activated on request by additional commands (e.g. a voice command).

Also the detachment can occur according to many variants. In addition to the examples already mentioned with abrupt movement, or by retaining the platform with the other hand, it is also possible to imagine other possibilities, based on commands of another type (e.g. a voice command) with which to inhibit the "stickiness", or with other types of movement, such as a swiping movement, which, moreover, would be fairly intuitive (in fact, you can detach from a "sticky" surface swiping over it).

A further option of implementation, which may be useful in many applications, and that therefore it is worth to mention explicitly, is to conceive of a tactile "skin" sensitive to pressure, but removable and applicable on different platforms or even (when convenient) directly on the payload that is placed on the platform itself. An example well illustrates this option of implementation.

It is then considered, but not limited to, the example of a self-moving cart controlled by a more or less remote control. Continuing to remaining within the considered example, for certain uses, it is convenient that said self-moving cart is provided with the possibility to be controlled, as well as remotely, also manually, and in an intuitive manner, by an operator. In this case, a wrapper constituted by a removable tactile "skin", sensitive to pressure, as described in the present invention, can be applied on said self-moving cart when required.

For example, said removable tactile "skin" can be applied so as to surround the platform (possibly already loaded) along its perimeter, and placed in such a position that covers the surfaces in the zones on which is comfortable to manually push the cart. Said removable tactile "skin", applied so as to be well-fitting, would work exactly as in previously described cases (cases in which the said tactile "skin" sensitive to the pressure is instead permanently applied on the self-moving platform), and would provide the pressure information that are necessary (and sufficient) to generate the control commands for the platform movement, as previously illustrated for the case of fixed tactile "skins".

Such pressure information should be processed appropriately, not for the direct generation of the control commands for the movement, but rather to generate intermediate commands; for example, commands to be transmitted to the existing remote control, so that the latter generates the control commands for the movement of the platform, according to the intuitive model which is adopted ("empty box", or "sticky empty box", or others).

Therefore, by synthesizing the just exposed variant, in order to catch a generalization from the foregoing by way of example, it can be concluded that generic self-moving platforms can be equipped, even temporarily, with a removable tactile "skin" sensitive to the pressure, so that they are, however, self-moving platforms according to the teachings of the present invention.

In order to allow the overall system to work properly, it is obviously useful to devise a removable system that also includes, in addition to the removable tactile "skin", appropriate computing means and interface means suitable to support communications and data exchanges. Said computing means perform an initial processing of the data provided by the system of the sensors of the tactile "skin"; while said interface means are suitable to be coupled to other control systems. In fact, the application of a removable tactile "skin" requires to integrate the processing of the pressure data detected by said tactile removable "skin" into the procedures of the control systems for the movement of the considered self-moving platform (control systems which are typically already present in the platform). Therefore, these removable tactile "skins" sensitive to the pressure must always be associated with the appropriate "drivers" specific for the platform on which they are applied, so as to adapt the processes executed at the level of "skins" with the control system of the platform on which they are applied.

Obviously, many of the properties listed to describe the option based on the removable tactile "skin" are also found in implementations with permanent tactile "skin". In particular, the decoupling between the processing of the data coming from the pressure sensors (according to the interpretation of an intuitive model, e.g. the model of the "empty box") and the generation of the control commands on the motors of the wheel, is an implementation choice which can also be adopted in self-moving platforms (100) with permanent tactile "skins".

However, such a definite decoupling, which also provides for the use of distinct computing means and needs a suitable physical interface, is a typical option for implementations based on removable tactile "skins".

What is important to point out is the fact that the availability of continuous information about the extent of the contact pressure, allows an effective integration of control methodologies also based on many sensors, by performing the coherent interpretations of the operator's will, and by distinguishing the different cases, which is often not possible by the use of mere boolean sensors of contact.

In general, it is noted that an interesting prerogative of the present invention is that of being easily integrable with other complementary solutions, in order to translate the commands given by the user manually or intuitively into the motion control commands of a self-moving robotized platform 100.

For example, if the platform has handles, protruding edges, or other points that are suitable to be grasped, or in general utilized by an operator to intuitively control the movements of such platform, these parts of the platform may be equipped with suitable sensors which detect these actions by the operator (typically other pressure sensors), and the detected signals can be used to elaborate the corresponding automatic control commands of movement.

It is clear that the number of forms in which these additional gripping points can be implemented is extremely diverse, each can have unique characteristics and may or may not be relevant to the management of collisions, and therefore the measurement data must be interpreted and managed in a specific way for each case. What matters to highlight here is the fact that even these options, useful to improve the overall usability of the final implementation of a self-moving robotized platform 100, as well as useful, are also very easily integrable in a self-moving robotized platform 100 that is designed according to the teachings of the present invention.

## Claims

1. Self-moving robotized platform (100) comprising:
✔ a cover configured as a pressure sensor which covers at least part of the outer lateral faces of said self-moving robotized platform (100);
✔ at least one driving wheel;
✔ a computing unit configured to control the trajectories of the motion of said self-moving robotized platform (100) by means of control commands which impose instantaneous speeds computed in real time as a function of the instantaneous pressures detected by said cover configured as pressure sensor;
wherein said cover configured as pressure sensor is configured such that:
✔ it is suitable to evaluate both the areas where said pressures are exerted and their intensity, and are identifiable both the cases in which pressures are exerted in a single area and cases in which multiple pressures are exerted in more points of the lateral surfaces;
✔ and wherein said cover comprises a first layer configured to constitute one or more electrical components connected in a circuit, whose electrical characterization varies depending on the pressure with which said cover is squeezed, and this variation of the electrical characterization is continuous at least in a range of squeezing pressures which are applied;
✔ and wherein said first layer, or a second layer external to said first layer, is configured to perform, at least on a portion of the outer lateral faces of said robotized platform (100), a cushioning layer made of a deformable material in a non-permanent way;
and said computing unit is configured to control the trajectory of the motion of said self-moving robotized platform (100) by means of a computer procedure that imparts control commands in function of an estimate of the components of the pressures, detected by means of said cover configured as a pressure sensor, and exerted orthogonally on the lateral faces of said self-moving robotized platform (100); and said computer procedure is configured such that:
✔ it computes, in an approximate way, the direction of movement and the rotation of said self-moving robotized platform (100);
✔ said pressures are intuitive commands to impart, with absolute generality, the motion of said self-moving robotized platform as if such pressures were exerted on an "empty box";
✔ said control commands for said at least one driving wheel are suited to move said self-moving robotized platform (100) according to said direction of movement and to said rotation which have been computed so as to be intuitively compatible with the areas of application of the exerted pressures;
✔ the speed and the acceleration of such movements are a function of both the intensity of the detected pressure and of the state of motion of the platform itself.

2. Self-moving robotized platform (100) according to claim 1, in which said first layer comprises a sequence of tactile films (110) disposed so as to cover at least part of the lateral faces of said robotized platform (100), and said tactile films (110) are made of a conductor or semi-conductor material whose electrical characterization varies continuously depending on the pressure with which said tactile films (110) are squeezed.

3. Self-moving robotized platform (100) according to the preceding claim, in which said tactile films (110) are made of a conductor or semi-conductor material having the property of varying its electrical resistance depending on the pressure with which said tactile films (110) are squeezed.

4. Self-moving robotized platform (100) according to claim 2, in which said tactile films (110) are connected in at least one powered electric circuit, and said electrical circuit also includes components able to measure analog electrical quantities, and to make such measures available so that they can be automatically processed by computer.

5. Self-moving robotized platform (100) according to claim 2, in which said layer configured to perform, at least on a portion of the outer lateral faces of said robotized platform (100), a cushioning layer made of a deformable material in a non-permanent way, is a second outer layer (210), external to said first layer, and said second outer layer (210) is constituted by viscoelastic foams, or foam rubber, and these materials are **characterized by** an elastic coefficient "k" (211), so as they can return to assume the their original shape after having undergone a deformation caused by a pressure, even slight, exerted on their outer surface.

6. Self-moving robotized platform (100) according to claim 1, in which said layer configured to perform, at least on a portion of the outer lateral faces of said robotized platform (100), a cushioning layer made of a deformable material in a non-permanent way, coincides with the said first layer and it is made of a material electrically sensitive to pressure which, inserted in an electrical circuit, has an electrical characterization depending from the pressures to which it is subjected, and said electrical circuit also includes components able to measure analog electrical quantities and to make them available so that they can be automatically processed by computer; and said material electrically sensitive to pressure also presents a thickness such that, under the effect of such pressures, it assumes an elastic behavior suitable to implement also a cushioning function.

7. Self-moving robotized platform (100) according to the preceding claim, in which the calculation of the speed and acceleration that determine the motion commands for said self-moving robotized platform (100), also depends on parameters which can be settled in the calibration phase.

8. Self-moving robotized platform (100) according to the preceding claim, in which, in the presence of pressures exerted in opposite way, and on approximatively the same line, so as to cancel each other, at least partially, said platform (100) performs a process that provides to carry out an estimate of the stresses eventually applied on said at least one driving wheel, and to identify the presence, or absence, of components of torques **characterized in that**:
a) they are not entirely attributable to the control commands generated on the basis of other user commands,
b) they potentially contribute to a motion of the platform (100) having a component along the direction orthogonal to said line on which said pressures act so as to cancel each other, at least partially;
and in case of presence of torques characterized as mentioned in points a) and b), a computing unit comprised in said self-moving robotized platform (100), generates control commands on at least one driving wheel of said self-moving robotized platform (100) suitable for contributing to a motion of the platform (100) having a component along the direction orthogonal to said line on which said pressures act so as to cancel each other, at least partially.

9. Self-moving robotized platform (100) according to claim 1, in which the control commands for said at least one driving wheel, when a pressure is exerted in at least one area of the lateral surfaces of said self-moving robotized platform (100), are suited to move said self-moving robotized platform (100) in a way which is qualitatively similar to the motion of a very light empty box subjected to a push having a pressure like the one exerted in at least one area of the lateral surfaces of said self-moving robotized platform (100).

10. Self-moving robotized platform (100) according to claim 1, in which the control commands for said at least one driving wheel, when a pressure is exerted in at least one area of the lateral surfaces of said self-moving robotized platform (100), are suited to move said self-moving robotized platform (100) along a direction having a prevalent component which opposes to the detected pressure.

11. Self-moving robotized platform (100) according to the preceding claim, in which, when said detected pressure tends to decrease since the element with which said pressure is exerted tends to move away from said lateral surface, said self-moving robotized platform (100) moves in a way which is qualitatively similar to the motion of a very light empty and sticky box pulled from the point where said pressure which tends to decrease is exerted; and said motion tends to maintain the contact between said self-moving robotized platform (100) and the element with which said pressure is exerted, and also tends to compensate the decrease of the pressure.

12. Self-moving robotized platform (100) according to the preceding claim, in which the control commands for said at least one driving wheel are suited to move said self-moving robotized platform (100) in a way which is **characterized by** having a limited speed and a limited acceleration.

13. Self-moving robotized platform (100) according to any of the preceding claim, in which said cover configured as a pressure sensor, is a removable cover which can be applied temporarily to cover at least part of the outer lateral faces of said self-moving robotized platform (100).

14. Self-moving robotized platform (100) according to the preceding claim, in which said removable cover configured as a pressure sensor is associated to computing means apt to process the detected information of pressure, and able to interface other systems for the control of the movement of said self-moving robotized platform (100).

15. Self-moving robotized platform (100) according to claim 1, in which, in the case in which said first layer is configured to perform, at least on a portion of the outer lateral faces of said robotized platform (100), a cushioning layer made of a material deformable in a non-permanent way, said first layer is overlaid on to a further layer, also configured to perform a cushioning layer on the areas covered by said first layer.

## Patentansprüche

1. Selbstfahrende Roboterplattform (100) umfassend:
✔ einen als Drucksensor ausgebildeten Deckel, der mindestens einen Teil der äußeren Seitenfläche der genannten selbstfahrenden Roboterplattform (100), deckt;
✔ mindestens ein Antriebsrad;
✔ eine Recheneinheit, die derart konfiguriert ist, um die Flugbahnen der Bewegung der genannten selbstfahrenden Roboterplattform (100) mit Hilfe von Steuerbefehlen, zu steuern, die sofortigen Geschwindigkeiten auferlegen, die in Echtzeit in Funktion von ihrer augenblicklichen Drücken berechnet werden, die durch die genannte als Drucksensor konfigurierte Abdeckung, ermittelt werden;
wobei die genannte als ein Drucksensor konfigurierte Abdeckung derart konfiguriert ist, dass:
✔ sie ist geeignet, sowohl die Bereiche, in denen die genannten Drücke ausgeübt werden, als auch ihre Intensität, zu bewerten und sowohl Fälle identifiziert werden können, in denen Drücke in einem einzigen Bereich ausgeübt werden, als auch Fälle, in denen mehrere Drücke in mehreren Punkten der Seitenflächen ausgeübt werden;
✔ und wobei die genannte Abdeckung eine erste Schicht aufweist, die derart konfiguriert ist, dass sie eine oder mehrere elektrische Komponenten bildet, die in einer Schaltung verbunden sind, deren elektrische Eigenschaften vom Druck abhängen, mit dem die genannte Abdeckung gepresst wird, und diese Variation der elektrischen Charakterisierung mindestens in einer Reihe von angewendeten Quetschdrücken, kontinuierlich ist;
✔ und wobei entweder die genannte erste Schicht, oder eine äußere zweite Schicht mit Bezug auf die erste Schicht, derart konfiguriert ist, dass sie zumindest auf einem Teil der äußeren Seitenflächen der genannten Roboterplattform (100), eine Lagerschicht bilden die aus einem deformierbaren Material in ein nicht permanenter Weg, besteht;
und die genannte Recheneinheit derart konfiguriert ist, dass sie die Bewegungsbahn der genannten selbstfahrenden Roboterplattform (100) mittels einer Computerprozedur steuert, die Steuerbefehle in Abhängigkeit von einer Schätzung der Komponenten der Drücke erteilt, die mittels der genannten als Drucksensor konfigurierten Abdeckung, erfasst werden, und die orthogonal auf die Seitenflächen der genannten selbstfahrenden Roboterplattform (100) ausgeübt werden; und die genannte Computerprozedur derart konfiguriert ist, dass:
✔ sie berechnet, in einer angenäherten Weise, die Direktion der Bewegung und die Drehung der genannten selbstfahrenden Roboterplattform (100);
✔ die genannten Drücke sind intuitive Befehle, um die Bewegung der genannten selbstfahrenden Roboterplattform, mit absoluter Allgemeinheit, derart zu vermitteln, als ob solche Drücke auf eine "leere Kiste" ausgeübt würden;
✔ die genannten Steuerbefehle für das mindestens eine Antriebsrad dazu geeignet sind, die genannte selbstfahrende Roboterplattform (100) gemäß der genannten Bewegungsrichtung und der genannten Drehung zu bewegen, die derart berechnet wurden, dass sie intuitiv mit den Anwendungsbereichen der ausgeübten Drücke, kompatibel sind;
✔ die Geschwindigkeit und die Beschleunigung solcher Bewegungen hängen sowohl von der Intensität des erfassten Drucks als auch vom Bewegungszustand der Plattform selbst ab.

2. Selbstfahrende Roboterplattform (100) nach Anspruch 1, in der die genannte erste Schicht eine Folge von taktilen Filme (110) umfasst, die derart angeordnet sind, dass sie zumindest einen Teil der Seitenflächen der genannten Roboterplattform (100) bedecken, und die genannten taktilen Filme (110) aus einem Leiter-oder Halbleitermaterial bestehen, deren elektrische Kennlinie kontinuierlich auf dem Druck abhängig variiert, mit dem die genannten taktilen Filme (110) gequetscht werden.

3. Selbstfahrende Roboterplattform (100) nach dem vorhergehenden Anspruch, bei der die genannten taktile Filme (110) aus einem Leiter oder Halbleitermaterial hergestellt sind, das die Eigenschaft hat, seinen elektrischen Widerstand in Abhängigkeit von dem Druck zu variieren, mit dem die genannten Tastfilme (110) gequetscht werden.

4. Selbstfahrende Roboterplattform (100) nach Anspruch 2, in dem die genannten taktilen Filme (110) in mindestens einer angetriebenen elektrischen Schaltung verbunden sind, und wobei die genannte elektrische Schaltung auch Komponenten enthält, die in der Lage sind, analoge elektrische Größen zu messen, und solche Maßnahmen derart verfügbar zu machen, dass sie automatisch vom Computer verarbeitet werden können.

5. Selbstfahrende Roboterplattform (100) nach Anspruch 2, wobei die genannte Schicht, die derart konfiguriert ist, um zumindest auf einem Teil der äußeren Seitenflächen der Roboterplattform (100) eine Lagerschicht aus einem verformbaren Material in einer nicht permanenten Art und Weise, eine zweite äußere Schicht (210) ist, die außerhalb der genannten ersten Schicht angeordnet ist, und die genannte äußere Schicht (210) aus visko-elastischen Schaümen oder aus Schaumgummi besteht, und wobei diese Materialien durch einen elastischen Koeffizienten "k" (211) derart gekennzeichnet sind, dass sie nach einer Verformung, die durch einen auch geringen Druck auf ihre Außenfläche verursacht wird, wieder in ihre ursprüngliche Form zurückkehren können.

6. Selbstfahrende Roboterplattform (100) nach Anspruch 1, wobei die genannte Schicht derart konfiguriert ist, dass sie zumindest auf einem Teil der äußeren Seitenflächen der Roboterplattform (100) eine Lagerschicht aus einem verformbaren Material in einer nicht permanenten Art und Weise, zu bilden, der mit der genannten ersten Schicht zusammenfällt und aus einem Material besteht, das empfindlich gegenüber einem Druck ist, der, wenn es in einer elektrischen Schaltung eingefügt wird, eine elektrische Kennlinie in Abhängigkeit von den Drücken, denen sie ausgesetzt ist, und die genannte elektrische Schaltung auch Komponenten enthält, die in der Lage sind, analoge elektrische Mengen zu messen, und sie zur Verfügung derart zu stellen, dass sie automatisch durch Computer verarbeitet werden können; und das genannte Material, das gegenüber Druck elektrisch empfindlich ist, auch eine solche Dicke aufweist, dass es unter der Wirkung solcher Drücke ein elastisches Verhalten annimmt, das geeignet ist, auch eine Dämpfungsfunktion auszuführen.

7. Selbstfahrende Roboterplattform (100) nach dem vorhergehenden Anspruch, wobei die Berechnung der Geschwindigkeit und der Beschleunigung, die die Bewegungsbefehle für die genannte selbstfahrende Roboterplattform (100) bestimmen, auch von Parametern abhängt, die bei der Kalibrierungsphase eingestellt werden können.

8. Selbstfahrende Roboterplattform (100) nach dem vorhergehenden Anspruch, wobei bei entgegengesetzt ausgeübten Drücken, und annähernd auf die gleiche Linie, um sie gegenseitig aufzuheben, führt die genannte Plattform (100), zumindest teilweise, einen Prozess auf, der in der Lage ist, eine Schätzung der Belastungen auszuführen, die auf zumindest einem der genannten Antriebsräder, und das Vorhandensein oder die Abwesenheit von Komponenten von Drehmomenten zu identifizieren, **dadurch gekennzeichnet, dass**:
a) sie sind nicht vollständig auf die Steuerbefehle zuzuschreiben, die auf der Basis von anderen Benutzerbefehlen erzeugt werden,
b) sie tragen potentiell zu einer Bewegung der Plattform (100) bei, das eine Komponente entlang der Richtung orthogonal zur genannten Linie, auf der die genannten Drücke wirken, um sich zumindest teilweise, gegenseitig aufzuheben;
und im Falle der Anwesenheit von Drehmomenten, die wie in Punkten a) und b) genannt worden sind, eine Recheneinheit, die in der genannten selbstfahrenden Roboterplattform (100) enthalten ist, Steuerbefehle auf mindestens ein Antriebsrad der genannten selbstfahrenden Roboterplattform (100) erzeugt, die geeignet sind, um einer Bewegung der Plattform (100) beizutragen, die eine Komponente entlang der Richtung orthogonal zu der genannten Linie, auf der die genannten Drücke sich gegenseitig aufheben, zumindest teilweise aufweist.

9. Selbstfahrende Roboterplattform (100) nach Anspruch 1, wobei die Steuerbefehle für das genannte mindestens eine Antriebsrad, wenn in mindestens einem Bereich der Seitenflächen der selbstfahrenden Roboterplattform (100) ein Druck ausgeübt wird, geeignet sind, um die selbstfahrende Roboterplattform (100) auf eine Weise zu bewegen, die der Bewegung eines sehr leichten leeren Kastens qualitativ ähnlich ist, der einem Druck ausgesetzt ist, der einem Druck ähnlich dem ist, der in mindestens einem Bereich der Seitenflächen der selbstfahrenden Roboterplattform (100) ausgeübt wird.

10. Selbstfahrende Roboterplattform (100) nach Anspruch 1, wobei die Steuerbefehle für das genannte mindestens ein Antriebsrad, wenn in mindestens einem Bereich der Seitenflächen der selbstfahrenden Roboterplattform (100) ein Druck ausgeübt wird, geeignet sind, um die genannte selbstfahrende Roboterplattform (100) entlang einer Richtung mit einer vorherrschenden Komponente zu bewegen, die dem erfassten Druck entgegenwirkt.

11. Selbstfahrende Roboterplattform (100) nach dem vorhergehenden Anspruch, wobei, wenn der genannte erfasste Druck neigt dazu abzunehmen, weil das Element mit dem der genannte Druck ausgeübt wird dazu neigt, sich von der genannten Seitenfläche wegzubewegen, bewegt sich die genannte selbstfahrende Roboterplattform (100) auf eine Art und Weise, die der Bewegung eines sehr leichten leeren und klebrigen Kastens qualitativ ähnlich ist, der von dem Punkt gezogen wird, an dem der Druck, der dazu neigt, abzunehmen, ausgeübt wird; und die genannte Bewegung dazu neigt, den Kontakt zwischen der genannten selbstfahrende Roboterplattform (100) und dem Element aufrechtzuerhalten, mit dem der genannte Druck ausgeübt wird, und auch dazu neigt, die Abnahme des Drucks zu kompensieren.

12. Selbstfahrende Roboterplattform (100) nach dem vorhergehenden Anspruch, wobei die Steuerbefehle für das genannte mindestens ein Antriebsrad dazu geeignet sind, die genannte selbstfahrende Roboterplattform (100) auf eine Weise zu bewegen, die durch eine begrenzte Geschwindigkeit und eine begrenzte Beschleunigung gekennzeichnet ist.

13. Selbstfahrende Roboterplattform (100) nach einem der vorhergehenden Ansprüche, wobei die genannte Abdeckung als ein Drucksensor ausgebildet und eine entfernbare Abdeckung ist, die vorübergehend angewendet werden kann, zur Abdeckung von zumindest einem Teil der äußeren Seitenfläche der genannten selbstfahrenden Roboterplattform (100).

14. Selbstfahrende Roboterplattform (100) nach dem vorhergehenden Anspruch, wobei die genannte abnehmbare Abdeckung, die als ein Drucksensor konfiguriert ist, mit Rechenmitteln verbunden ist, die geeignet sind, die erfasste Druckinformation zu verarbeiten, und die geeignet sind, mit anderen Systemen für die Steuerung der Bewegung der selbstfahrenden Roboterplattform (100), zusammenzuwirken.

15. Selbstfahrende Roboterplattform (100) nach Anspruch 1, wobei in dem Falle, in dem die genannte erste Schicht derart konfiguriert ist, dass sie zumindest auf einem Teil der äußeren seitlichen Flächen der genannten Roboterplattform (100), eine Lagerschicht zu bilden, die aus einem Material hergestellt wird, das auf nicht dauerhafte Weise verformbar ist, wobei die genannte erste Schicht auf einer weiteren Schicht überlagert ist, die auch derart konfiguriert ist, dass sie eine Lagerschicht auf den von der ersten Schicht bedeckten Bereichen auszuführen.

## Revendications

1. Plate-forme robotisée automotrice (100) comprenant:
✔ un couvercle configuré comme un capteur de pression qui couvre au moins une partie de la surface latérale externe de ladite plateforme robotisée automotrice (100);
✔ au moins une roue motrice;
✔ une unité de calcul configurée pour contrôler la trajectoire du mouvement de ladite plateforme robotisée automotrice (100) au moyen d'instructions de commande qui imposent des vitesses instantanées calculées en temps réel en fonction de leur pressions instantanées détectées par ledit couvercle configuré comme un capteur de pression;
dans lequel ledit couvercle configuré comme un capteur de pression est configuré tel que:
✔ il est adapté pour évaluer à la fois les zones où lesdites pressions sont exercées et leur intensité, et sont identifiables à la fois les cas dans lesquels des pressions sont exercées dans une seule zone et les cas où de multiples pressions sont exercées en plusieurs points des surfaces latérales;
✔ et dans lequel ledit couvercle comprend une première couche configurée pour constituer un ou plusieurs composants électriques connectés dans un circuit, dont la caractérisation électrique varie en fonction de la pression avec laquelle ledit couvercle est comprimé, et cette variation de la caractérisation électrique est continue au moins dans une gamme de pressions de compression qui sont appliquées;
✔ et dans lequel ladite première couche ou une deuxième couche externe à ladite première couche est configurée pour effectuer, au moins sur une partie des surfaces latérales externes de ladite plateforme robotisée automotrice (100), une couche d'amortissement constituée d'un matériau déformable dans un manière non permanente;
et ladite unité de calcul est configurée pour contrôler la trajectoire du mouvement de ladite plateforme robotisée automotrice (100) au moyen d'une procédure informatique qui donne des ordres de commande en fonction d'une estimation des composantes des pressions, détectée au moyen dudit couvercle configuré en tant que capteur de pression, et exercée orthogonalement sur les surfaces latérales de ladite plate-forme robotisée automotrice (100); et ladite procédure informatique est configurée de telle sorte que:
✔ elle calcule, de façon approximative, les direction de mouvement et la rotation de ladite plate-forme robotisée automotrice (100);
✔ lesdites pressions sont des commandes intuitives pour communiquer, avec une généralité absolue, le mouvement de ladite plate-forme robotisée automotrice, comme si de telles pressions étaient exercées sur une "boîte vide";
✔ lesdites commandes de contrôle pour ladite au moins une roue motrice sont adaptées pour déplacer ladite plateforme robotisée automotrice (100) selon ladite direction de déplacement et ladite rotation qui ont été calculées pour être intuitivement compatibles avec les zones d'application des pressions exercées;
✔ la vitesse et l'accélération des tels mouvements sont une fonction à la fois de l'intensité de la pression détectée et de l'état de mouvement de la plateforme elle-même .

2. Plate-forme robotisée automotrice (100) selon la revendication 1, dans laquelle dit première couche comprend une séquence de films tactiles (110) disposés de manière à recouvrir au moins une partie des faces latérales de ladite plateforme robotisée (100) et lesdits films tactiles (110) sont faits d'un matériau conducteur ou semi-conducteur dont la caractérisation électrique varie de façon continue en fonction de la pression avec laquelle lesdits films tactiles (110) sont comprimés.

3. Plate-forme robotisée automotrice (100) selon la revendication précédente, dans laquelle lesdits films tactiles (110) sont constitués d'un matériau conducteur ou semi-conducteur ayant la propriété de faire varier sa résistance électrique en fonction de la pression avec laquelle lesdits films tactiles (110) sont comprimés.

4. Plate-forme robotisée automotrice (100) selon la revendication 2, dans laquelle lesdits films tactiles (110) sont connectées dans au moins un circuit électrique motorisé, et ledit circuit électrique comprend également des composants capables de mesurer des grandeurs électriques analogiques, et pour faire de telles mesures disponibles afin qu'elles puissent être traitées automatiquement par ordinateur.

5. Plate-forme robotisée automotrice (100) selon la revendication 2, dans laquelle ladite couche est configurée pour réaliser, au moins sur une partie des faces latérales externes de ladite plate-forme robotisée (100), une couche d'appui constituée d'un matériau déformable dans une manière non permanente, est une deuxième couche extérieure (210), externe à ladite première couche, et ladite deuxième couche extérieure (210) est constitué par des mousses viscoélastiques, ou par une mousse de caoutchouc, et ces matériaux sont **caractérisés par** un coefficient d'élasticité «k» (211), de sorte qu'ils peuvent reprendre leur forme d'origine après avoir subi une déformation provoquée par une pression, même légère, exercée sur leur surface extérieure.

6. Plate-forme robotisée automotrice (100) selon la revendication 1, dans laquelle ladite couche est configurée pour réaliser, au moins sur une partie des faces latérales externes de ladite plate-forme robotisée (100), une couche d'appui constituée d'un matériau déformable dans une façon permanente, coïncide avec ladite première couche et est constituée d'un matériau sensible électriquement à la pression qui, une fois inséré dans un circuit électrique, a une caractérisation électrique en fonction des pressions auxquelles il est soumis, et ledit circuit électrique comprend également des composants capables de mesurer des quantités électriques analogiques et de les rendre disponibles, afin qu'ils puissent être automatiquement traitées par ordinateur; et ledit matériau électriquement sensible à la pression présente également une épaisseur telle que, sous l'effet de telles pressions, il adopte un comportement élastique apte à exécuter également une fonction d'amortissement.

7. Plate-forme robotisée automotrice (100) selon la revendication précédente , dans laquelle le calcul de la vitesse et de l'accélération qui déterminent les commandes de mouvement pour ladite plate-forme robotisée automotrice (100) dépend également des paramètres qui peuvent être réglés lors de la phase d'étalonnage.

8. Plate-forme robotisée automotrice (100) selon la revendication précédente, dans laquelle, en présence de pressions exercées de manière opposée, et approximativement sur la même ligne, afin de s'annuler réciproquement, au moins partiellement, ladite plate-forme (100) exécute un processus qui permet d'effectuer une estimation des contraintes éventuellement appliquées sur ladite au moins une roue motrice, et pour identifier la présence, ou l'absence, de composants de couples, **caractérisé en ce que**:
a) ils ne sont pas entièrement attribuables aux commandes de contrôle générées sur la base d'autres commandes d'un utilisateur,
b) ils contribuent potentiellement à un mouvement de la plate-forme (100) ayant un composant le long de la direction perpendiculaire à ladite ligne sur laquelle lesdites pressions agissent de manière à s'annuler l'une l'autre, au moins partiellement;
et en cas de présence de couples caractérisés comme indiqué dans les points a) et b), une unité de calcul comprise dans ladite plate-forme robotisée automotrice (100), génère des commandes de contrôle sur au moins une roue motrice de ladite plate-forme robotisée automotrice (100) apte pour contribuer à un mouvement de la plate-forme (100) ayant un composant le long de la direction orthogonale à ladite ligne sur laquelle lesdites pressions agissent de manière à s'annuler l'une l'autre, au moins partiellement.

9. Plate-forme robotisée automotrice (100) selon la revendication 1, dans laquelle les instructions de commande pour ladite au moins une roue motrice, quand on exerce une pression dans au moins une zone des faces latérales de la plate-forme robotisée automotrice (100), sont aptes à déplacer ladite plate-forme robotisée automotrice (100) d'une manière qualitativement similaire au mouvement d'une boîte vide très légère soumise à une poussée exerçant une pression semblable à celle exercée dans au moins une zone des faces latérales de ladite plate-forme robotisée automotrice (100).

10. Plate-forme robotisée automotrice (100) selon la revendication 1, dans laquelle les commandes de contrôle pour ladite au moins une roue motrice, lorsqu'une pression est exercée dans au moins une zone des faces latérales de ladite plate-forme robotisée automotrice (100), sont adaptés pour déplacer ladite plate-forme robotisée automotrice (100) le long d'une direction ayant une composante prédominante qui s'oppose à la pression détectée.

11. Plate-forme robotisée automotrice (100) selon la revendication précédente, dans laquelle, lorsque ladite pression détectée tend à diminuer car l'élément avec lequel ladite pression est exercée tend à s'éloigner de ladite face latérale, ladite plate-forme robotisée automotrice (100) se déplace d'une manière qualitativement similaire au mouvement d'une très légère boîte vide et collante tirée du point où ladite pression qui tend à diminuer est exercée; et ledit mouvement tend à maintenir le contact entre ladite plate-forme robotisée automotrice (100) et l'élément avec lequel ladite pression est exercée, et tend également à compenser la diminution de la pression.

12. Plate-forme robotisée automotrice (100) selon la revendication précédente, dans laquelle les commandes de contrôle pour ladite au moins une roue motrice sont adaptées pour se déplacer à l'aide d'une plate-forme robotisée automotrice (100) d'une manière qui se **caractérise par le fait qu'**elle a une vitesse et une accélération limitées.

13. Plate-forme robotisée automotrice (100) selon l'une quelconque des revendications précédentes, dans laquelle ledit couvercle configuré comme un capteur de pression, est un couvercle amovible qui peut être appliqué temporairement à couvrir au moins une partie de la face latérale externe de ladite plate-forme robotisée automotrice (100).

14. Plate-forme robotisée automotrice (100) selon la revendication précédente, dans laquelle ledit couvercle amovible configuré en tant que capteur de pression est associé à des moyens de calcul aptes à élaborer les informations de pression détectées et aptes à s'interfacer avec d'autres systèmes pour la commande du mouvement de ladite plate-forme robotisée automotrice (100).

15. Plate-forme robotisée automotrice (100) selon la revendication 1, dans laquelle, dans le cas où ladite première couche est configurée pour réaliser, au moins sur une partie des faces latérales externes de ladite plate-forme robotisée (100), une couche d'amortissement constituée d'un matériau déformable de manière non permanente, ladite première couche étant superposée sur une autre couche, également configurée pour réaliser une couche d'amortissement sur les zones couvertes par ladite première couche.
